# EUROPEAN PATENT APPLICATION

(11) **EP 3 986 033 A1**
(43) Date of publication of application: **20.04.2022**
(21) Application number: 20844616.1
(22) Date of filing: 21.07.2020
(51) Int. Cl.: H04W 52/02

(54) **COMMUNICATION METHOD AND APPARATUS**

(30) Priority: 23.07.2019 CN 201910666417
(71) Applicant: Huawei Technologies Co., Ltd., Longgang District Shenzhen, Guangdong 518129 (CN)
(72) Inventor: ZHANG, Zhanzhan, Shenzhen, Guangdong 518129 (CN); TIE, Xiaolei, Shenzhen, Guangdong 518129 (CN)
(74) Representative: Pfenning, Meinig & Partner mbB
(86) International application number: PCT/CN2020/103228
(87) International publication number: WO 2021/013144

(57) **Abstract**

This application discloses a communication method and apparatus. A network device sends first information to a terminal device. The terminal device receives the first information from the network device. The first information is used to indicate the terminal device to skip PDCCH blind detection. The network device/the terminal device determines a start moment of a first time period based on the first information. The network device stops sending downlink control information to the terminal device by using a PDCCH within the first time period from the start moment of the first time period. The terminal device stops the PDCCH detection within the first time period from the start moment of the first time period. The network device and the terminal device determine a time from which the PDCCH detection is actually stopped, so that the network device and the terminal device can have consistent understanding for the time from which the terminal device actually stops the PDCCH detection, to improve resource utilization and reduce power consumption of the terminal device.

## Description

This application claims priority to Chinese Patent Application No. 201910666417.4, filed with the China National Intellectual Property Administration on July 23, 2019 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

Currently, it is generally considered that periodic physical downlink control channel (physical downlink control channel, PDCCH) blind detection performed by a terminal device causes large power consumption. However, in many cases, effective scheduling cannot be detected through continuous PDCCH blind detection performed by the terminal device. In this case, the power consumption of the PDCCH blind detection is unnecessary. The reason is that there is a specific time interval for data scheduling because actual data arrives randomly and dynamically. This depends on a type of application layer data and an action of a user operating the terminal device. This causes a specific interval between two times of indicating effective scheduling by using PDCCHs (scheduling a physical downlink shared channel (physical downlink shared channel, PDSCH)/scheduling a physical uplink shared channel (physical uplink shared channel, PUSCH)). For example, when data is relatively sparse (for example, bursty traffic (bursty traffic)) or there is no data transmission for the time being, there may be a relatively large interval between two consecutive times of indicating effective scheduling by using the PDCCHs. In addition, even if a service is currently being performed, data is not continuously scheduled based on different service types and a type of a scheduler used by the network device. For example, for a web browsing-type (web browsing) service and a voice over Internet protocol-type (voice over Internet protocol, VoIP) service, an interval between two times of consecutive scheduling by using the PDCCHs may be tens of milliseconds (ms). In addition, when the network device serves a plurality of terminal devices, the scheduler may schedule the terminal devices in a time division multiplexing (time division multiplexing, TDM) manner. This also causes a specific time interval between two consecutive times of indicating effective scheduling by using the PDCCHs received by the terminal device.

To reduce the power consumption of the terminal device, a network side may indicate a power saving signal (power saving signal) by using downlink control information (downlink control information, DCI). The power saving signal is used to indicate the terminal device to skip physical downlink control channel (physical downlink control channel, PDCCH) blind detection (PDCCH monitoring skipping) for a time period. To be specific, when there is no data transmission or when a network estimates that there is a specific time interval between two consecutive scheduling PDCCHs (scheduling PDCCH), the power saving signal based on the DCI may indicate the terminal device to skip the PDCCH blind detection for the time period, to reduce the power consumption of the terminal device. In addition, because no data is output currently or the network does not continuously send the scheduling PDCCHs, a data delay is slightly affected when the terminal device skips the PDCCH blind detection for the time period.

If the DCI indicates the terminal device to perform the PDCCH blind detection, the network and the terminal device need to agree on a start moment of the time period of the PDCCH blind detection. If the network and the terminal device do not agree on the start moment, the network and the terminal device have inconsistent understanding for whether to skip the PDCCH blind detection. In addition, only after the terminal device successfully decodes the DCI, it can be known whether the DCI indicates the terminal device to skip the PDCCH blind detection for the time period. Therefore, a moment from which the terminal device actually does not perform the PDCCH detection is after the PDCCH is successfully decoded.

Currently, the start moment of the time period for skipping the PDCCH blind detection and the moment from which the terminal device actually does not perform the PDCCH detection are not defined in a protocol yet. If the start moment of the time period for skipping the PDCCH blind detection is different from the moment from which the terminal device does not perform the PDCCH detection, a time in which the terminal device actually does not perform the PDCCH detection is shortened, thereby lessening benefits of skipping the PDCCH blind detection by the terminal device. In addition, if the definition is not clear, the network and the terminal device have inconsistent understanding for the start moment of actually skipping the PDCCH blind detection. This causes an increase in power consumption of the terminal device or a waste of network resources and network power consumption, and an increase in a delay.

### SUMMARY

This application provides a communication method and apparatus, to improve resource utilization and reduce power consumption of a terminal device.

According to a first aspect, a communication method is provided. The method includes: receiving first information from a network device, where the first information is used to indicate a terminal device to skip physical downlink control channel PDCCH blind detection; determining a start moment of a first time period based on the first information, where the start moment of the first time period is a start moment of a slot corresponding to a sum of a first slot value and a slot number of receiving the first information; and stopping the PDCCH detection within the first time period from the start moment of the first time period. In this aspect, the network device and the terminal device determine a time from which the PDCCH detection is actually stopped, so that the network device and the terminal device can have consistent understanding for the time from which the terminal device actually stops the PDCCH detection, to improve resource utilization and reduce power consumption of the terminal device.

In an implementation, after the receiving first information from a network device, the method further includes: performing the PDCCH detection before the start moment of the first time period. In this implementation, before the start moment of the first time period, the network device can still send downlink control information by using the PDCCH, and the terminal device still performs the PDCCH detection, to avoid an increase of a scheduling delay.

According to a second aspect, a communication method is provided. The method includes: sending first information to a terminal device, where the first information is used to indicate a terminal device to skip physical downlink control channel PDCCH blind detection; determining a start moment of a first time period based on the first information, where the start moment of the first time period is a start moment of a slot corresponding to a sum of a first slot value and a slot number of receiving the first information; and stopping sending downlink control information to the terminal device by using a PDCCH within the first time period from the start moment of the first time period.

In an implementation, after the sending first information to a terminal device, the method further includes: sending the downlink control information to the terminal device by using the PDCCH before the start moment of the first time period.

With reference to the first aspect or the second aspect, in another implementation, the first information is further used to indicate first duration of skipping the PDCCH blind detection, and a time length of the first time period is equal to the first duration.

With reference to the first aspect or the second aspect, in another implementation, the first slot value is a minimum K0 value, and the minimum K0 value is a minimum slot interval between the physical downlink control channel and a physical downlink shared channel. In this implementation, if the terminal device knows in advance that there is a minimum slot interval between the PDCCH and data scheduled by using the PDCCH or an aperiodic reference signal triggered by using the PDCCH, the terminal device may reduce a speed of decoding the PDCCH, to reduce a working clock frequency and a working voltage, thereby reducing power consumption. In this case, the first slot value is a minimum K0 value that can dynamically change. Because the terminal device has successfully decoded the DCI at the start moment of the slot corresponding to the sum of the minimum K0 value and the slot number of receiving the first information, a start moment from which the terminal device actually does not perform the PDCCH detection is set to the start moment of the slot corresponding to the sum of the minimum K0 value and the slot number of receiving the first information. In this way, the network device knows that the terminal device does not perform the PDCCH detection from the start moment of the first time period. Therefore, the following case can be avoided: The network device and the terminal device have inconsistent understanding for the moment from which the terminal device actually stops the PDCCH detection. In addition, a time length in which the terminal device actually does not perform the PDCCH detection is equal to the first duration in which the network device indicates the UE to skip the PDCCH blind detection, to fully reduce power consumption of the terminal device.

With reference to the first aspect or the second aspect, in another implementation, the first slot value is a first constant value. In this implementation, the first slot value is the fixed first constant value. Because the terminal device has successfully decoded the DCI at the start moment of the slot corresponding to the sum of the first constant value and the slot number of receiving the first information, a start moment from which the terminal device actually does not perform the PDCCH detection is set to the start moment of the slot corresponding to the sum of the first constant value and the slot number of receiving the first information. In this way, the network device knows that the terminal device does not perform the PDCCH detection from the start moment of the first time period. Therefore, the following case can be avoided: The network device and the terminal device have inconsistent understanding for the moment from which the terminal device actually stops the PDCCH detection. In addition, a time length in which the terminal device actually does not perform the PDCCH detection is equal to the first duration in which the network device indicates the UE to skip the PDCCH blind detection, to fully reduce power consumption of the terminal device.

With reference to the first aspect or the second aspect, in another implementation, the first constant value is associated with subcarrier spacing, a first constant value corresponding to first subcarrier spacing is greater than or equal to a first constant value corresponding to second subcarrier spacing, and the first subcarrier spacing is greater than the second subcarrier spacing.

With reference to the first aspect or the second aspect, in another implementation, the first slot value is a maximum value of a minimum K0 value and a first constant value, and the minimum K0 value is a minimum slot interval between the physical downlink control channel and a physical downlink shared channel. In this implementation, the first slot value is the maximum value of the minimum K0 value and the first constant value. Because the terminal device has successfully decoded the DCI at the start moment of the slot corresponding to the sum of the first slot value and the slot number of receiving the first information, a start moment from which the terminal device actually does not perform the PDCCH detection is set to the start moment of the slot corresponding to the sum of the first slot value and the slot number of receiving the first information. In this way, the network device knows that the terminal device does not perform the PDCCH detection from the start moment of the first time period. Therefore, the following case can be avoided: The network device and the terminal device have inconsistent understanding for the moment from which the terminal device actually stops the PDCCH detection. In addition, a time length in which the terminal device actually does not perform the PDCCH detection is equal to the first duration in which the network device indicates the UE to skip the PDCCH blind detection, to fully reduce power consumption of the terminal device.

According to a third aspect, a communication apparatus is provided and can implement the communication method in the first aspect or any implementation. For example, the communication apparatus may be a chip (for example, a communication chip) or a terminal device. The foregoing method may be implemented by using software or hardware, or by hardware executing corresponding software.

In a possible implementation, a processor and a memory are included in a structure of the communication apparatus. The processor is configured to support the apparatus in performing a corresponding function in the foregoing communication method. The memory is configured to be coupled to the processor. The memory stores a program (instructions) and/or data necessary for the apparatus. Optionally, the communication apparatus may further include a communication interface, configured to support communication between the apparatus and another network element.

In another possible implementation, the communication apparatus may include a unit or a module that performs a corresponding action in the foregoing method.

In still another possible implementation, a processor and a transceiver apparatus are included. The processor is coupled to the transceiver apparatus. The processor is configured to execute a computer program or instructions, to control the transceiver apparatus to receive and send information. When the processor executes the computer program or the instructions, the processor is further configured to implement the foregoing method. The transceiver apparatus may be a transceiver, a transceiver circuit, or an input/output interface. When the communication apparatus is a chip, the transceiver apparatus is a transceiver circuit or an input/output interface.

In still another possible implementation, a processor is included in a structure of the communication apparatus. The processor is configured to support the apparatus in performing a corresponding function in the foregoing communication method.

In still another possible implementation, a processor is included in a structure of the communication apparatus. The processor is configured to: be coupled to a memory, read instructions in the memory, and implement the foregoing method according to the instructions.

In still another possible implementation, a transceiver is included in a structure of the communication apparatus, and is configured to implement the foregoing communication method.

When the communication apparatus is a chip, a transceiver unit may be an input/output unit, for example, an input/output circuit or a communication interface. When the communication apparatus is user equipment, the transceiver unit may be a transmitter/receiver or a transmitter machine/receiver machine.

According to a fourth aspect, a communication apparatus is provided and can implement the communication method in the second aspect or any implementation. For example, the communication apparatus may be a chip (for example, a communication chip) or a terminal device. The foregoing method may be implemented by using software or hardware, or by hardware executing corresponding software.

In a possible implementation, a processor and a memory are included in a structure of the communication apparatus. The processor is configured to support the apparatus in performing a corresponding function in the foregoing communication method. The memory is configured to be coupled to the processor. The memory stores a program (instructions) and/or data necessary for the apparatus. Optionally, the communication apparatus may further include a communication interface, configured to support communication between the apparatus and another network element.

In another possible implementation, the communication apparatus may include a unit or a module that performs a corresponding action in the foregoing method.

In still another possible implementation, a processor and a transceiver apparatus are included. The processor is coupled to the transceiver apparatus. The processor is configured to execute a computer program or instructions, to control the transceiver apparatus to receive and send information. When the processor executes the computer program or the instructions, the processor is further configured to implement the foregoing method. The transceiver apparatus may be a transceiver, a transceiver circuit, or an input/output interface. When the communication apparatus is a chip, the transceiver apparatus is a transceiver circuit or an input/output interface.

In still another possible implementation, a processor is included in a structure of the communication apparatus. The processor is configured to support the apparatus in performing a corresponding function in the foregoing communication method.

In still another possible implementation, a processor is included in a structure of the communication apparatus. The processor is configured to: be coupled to a memory, read instructions in the memory, and implement the foregoing method according to the instructions.

In still another possible implementation, a transceiver is included in a structure of the communication apparatus, and is configured to implement the foregoing communication method.

When the communication apparatus is a chip, the transceiver unit may be an input/output unit, for example, an input/output circuit or a communication interface. When the communication apparatus is user equipment, the transceiver unit may be a transmitter/receiver or a transmitter machine/receiver machine.

According to a fifth aspect, a computer-readable storage medium is provided. The computer-readable storage medium stores instructions. When the instructions are run on a computer, the computer is enabled to perform the methods according to the foregoing aspects.

According to a sixth aspect, a computer program product including instructions is provided. When the computer program product runs on a computer, the computer is enabled to perform the methods according to the foregoing aspects.

### BRIEF DESCRIPTION OF DRAWINGS

To describe technical solutions in embodiments of the present invention or in the background more clearly, the following describes the accompanying drawings required for describing the embodiments of the present invention or the background.
FIG. 1 is a schematic diagram of a power saving signal carried in scheduling DCI;
FIG. 2 is a schematic diagram of a power saving signal carried in non-scheduling DCI;
FIG. 3 is a schematic diagram of scheduling of uplink/downlink data;
FIG. 4 is a schematic diagram of power consumption comparison between decoding a PDCCH and caching downlink data, and decoding a PDCCH and not caching downlink data;
FIG. 5 is a schematic diagram of PDCCH decoding duration required in intra-slot scheduling or cross-slot scheduling;
FIG. 6 is a schematic diagram in which a start moment that is of a time period in which a terminal device skips PDCCH blind detection and that is determined by a network side is inconsistent with a time from which the terminal device actually does not perform PDCCH detection;
FIG. 7 is a schematic architectural diagram of a communication system according to this application;
FIG. 8 is a schematic diagram of an interaction process of a communication method according to an embodiment of this application;
FIG. 9 is a schematic diagram of an example in which a terminal device actually starts to skip physical downlink control channel blind detection;
FIG. 10 is another schematic diagram of an example in which a terminal device actually starts to skip physical downlink control channel blind detection;
FIG. 11 is another schematic diagram of an example in which a terminal device actually starts to skip physical downlink control channel blind detection;
FIG. 12 is another schematic diagram of an example in which a terminal device actually starts to skip physical downlink control channel blind detection;
FIG. 13 is another schematic diagram of an example in which a terminal device actually starts to skip physical downlink control channel blind detection;
FIG. 14 is another schematic diagram of an example in which a terminal device actually starts to skip physical downlink control channel blind detection;
FIG. 15 is another schematic diagram of an example in which a terminal device actually starts to skip physical downlink control channel blind detection;
FIG. 16 is a schematic diagram of a structure of a communication apparatus according to an embodiment of this application;
FIG. 17 is a schematic diagram of a structure of another communication apparatus according to an embodiment of this application;
FIG. 18 is a simplified schematic diagram of a structure of a terminal device according to an embodiment of this application; and
FIG. 19 is a simplified schematic diagram of a structure of a network device according to an embodiment of this application.

### DESCRIPTION OF EMBODIMENTS

The following describes the embodiments of the present invention with reference to the accompanying drawings in the embodiments of the present invention.

First, possibly related background knowledge in the embodiments of this application is described.

### (1) Power saving signal

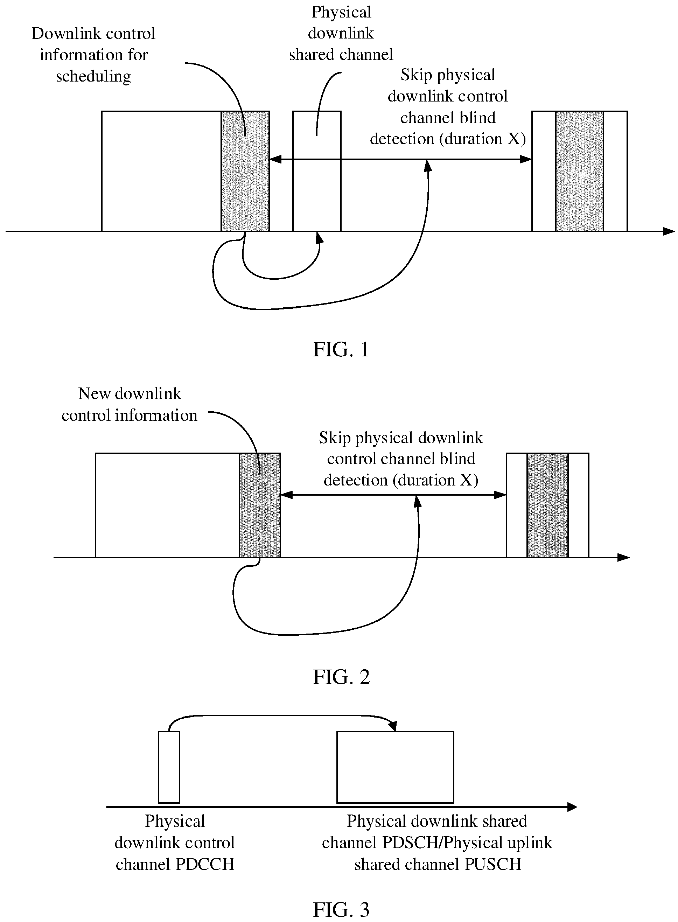

FIG. 1 is a schematic diagram of a power saving signal carried in scheduling DCI. A power saving signal for indicating a terminal device to skip PDCCH blind detection is carried in scheduling DCI. In addition, the power saving signal further indicates duration (X in the figure) in which the terminal device skips the PDCCH blind detection. The terminal device does not perform PDCCH monitoring within an indicated time period of skipping the PDCCH blind detection. After the time period ends, the terminal device normally performs the PDCCH detection.

The power saving signal for indicating the terminal device to skip the PDCCH blind detection may be carried in the scheduling DCI, or may be carried in non-scheduling DCI. For example, a new DCI format is introduced into a standard. As shown in FIG. 2, the power saving signal is carried in new DCI.

In addition, the DCI carrying the power saving signal may indicate only one terminal device. In other words, the DCI is sent only in specific search space (specific search space). In this case, a cyclic redundancy check (cyclic redundancy check, CRC) bit of the PDCCH for transmitting the DCI is scrambled by using a cell-radio network temporary identifier (cell-radio network temporary identifier, C-RNTI). Alternatively, the DCI may indicate a group of terminal devices. In other words, the DCI is in common search space (common search space). In this case, a CRC bit of the PDCCH for transmitting the DCI is scrambled by using the same RNTI allocated to a plurality of terminal devices, for example, a power saving radio network temporary identifier (power saving radio network temporary identifier, PS-RNTI).

For the indicated duration in which the terminal device skips the PDCCH blind detection, a time scale of the duration is generally considered to be shorter than a connected discontinuous reception (connected discontinuous reception, C-DRX) period of a medium access control (medium access control, MAC) layer configured in a network, for example, shorter than a length of a discontinuous reception inactive timer (drx-inactivitytimer). The duration is generally considered to be tens of milliseconds, for example, 10 ms or 20 ms. In addition, it is generally considered that, that the terminal device skips the PDCCH blind detection is an action at a physical layer. Therefore, the power saving indication does not affect various timers at the MAC layer.

A function of indicating the terminal device to skip the PDCCH blind detection may be used when C-DRX is configured or C-DRX is not configured. However, it is generally considered that the function is used together with C-DRX. In other words, the function is configured in the network only when C-DRX is configured.

### (2) Intra-slot scheduling and cross-slot scheduling (cross-slot scheduling)

A scheduling manner in the NR release 15 is as follows:
In NR Rel-15, when a base station schedules a terminal device to receive downlink data or a base station schedules a terminal device to send uplink data, as shown in a schematic diagram of scheduling of uplink/downlink data in FIG. 3, DCI is first sent by using a PDCCH, and the DCI indicates a transmission parameter of a PDSCH or a PUSCH. The transmission parameter includes a location of a time-domain resource of the PDSCH/PUSCH.

Specifically, the location of the time-domain resource includes:
1. a slot in which the PDSCH/PUSCH is located; and
2. a start location and a length of a symbol occupied by the PDSCH/PUSCH in the slot.

A slot interval between the PDCCH and the PDSCH is represented by K0. A slot interval between the PDCCH and the PUSCH is represented by K2. The base station configures an available value set of K0/K2 for the terminal device by using radio resource control (radio resource control, RRC) signaling, for example, configures a time-domain resource allocation (time-domain resource allocation, TDRA) table. The table includes a plurality of K0/K2 values. Then, the base station indicates a value from the available value set in the TDRA table by using the DCI in the PDCCH. The value is used for current data scheduling.

In the foregoing scheduling manner, if the PDCCH and the PDSCH (or the PUSCH) are in the same slot, it is referred to as intra-slot scheduling (corresponding to a case in which K0=0 or K2=0). If the PDCCH and the PDSCH (or the PUSCH) are in different slots, it is referred to as cross-slot scheduling (corresponding to a case in which K0>0 or K2>0).

It may be learned that before the terminal device successfully decodes the PDCCH, the terminal device does not know a specific value of K0/K2 indicated in the PDCCH. For example, in downlink, if the K0 available value set configured by the base station for the terminal device includes both a case in which K0=0 and a case in which K0>0, before decoding the PDCCH, the terminal device does not know whether current scheduling is intra-slot scheduling or cross-slot scheduling. Only after the terminal device successfully decodes the PDCCH and obtains K0 from the DCI, the terminal device can know a specific slot in which the currently scheduled PDSCH is located.

In addition, an aperiodic reference signal (for example, a channel state information-reference signal (channel state information-reference signal, CSI-RS)/a sounding reference signal (sounding reference signal, SRS)/a tracking reference signal (tracking reference signal, TRS)) triggered by the PDCCH is also divided into intra-slot triggering and cross-slot triggering. If the PDCCH and the triggered aperiodic reference signal are in the same slot, it is referred to as the intra-slot triggering. If the PDCCH and the triggered aperiodic reference signal are in different slots, it is referred to as the cross-slot triggering. In this case, a slot interval between the PDCCH and the aperiodic reference signal triggered by the PDCCH is referred to as a "triggering offset" (triggering offset).

### (3) Cross-slot scheduling in NR Rel-16 (power saving)

Currently, power consumption of the terminal device is reduced through indicating a minimum value of "K0/K2/a CSI-RS triggering offset/an SRS triggering offset/a TRS triggering offset".

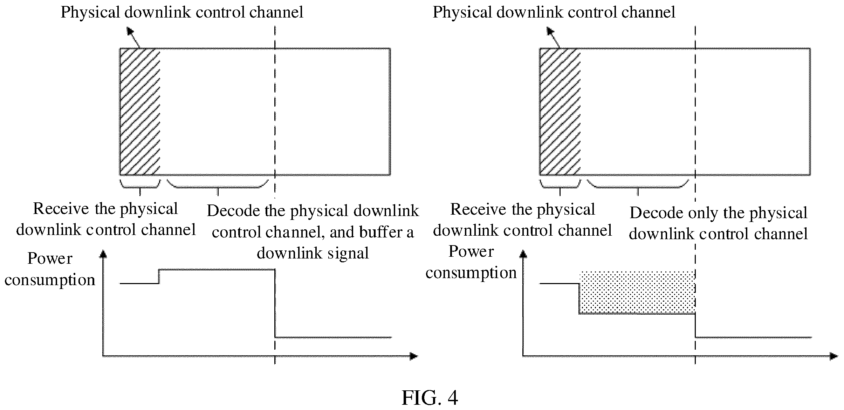

This is because the foregoing scheduling manner in Rel-15 does not facilitate energy saving of the terminal device. FIG. 4 is a schematic diagram of power consumption comparison between decoding a PDCCH and caching downlink data, and decoding a PDCCH and not caching downlink data. In an example of scheduling a PDSCH by using a PDCCH, as shown in a left part of FIG. 4, if the terminal device does not know whether intra-slot scheduling exists in a current slot (the intra-slot scheduling may exist provided that the TDRA table configured by the base station includes K0=0), to avoid a loss of a signal, after receiving the PDCCH, the terminal device needs to cache a downlink signal when decoding the PDCCH. If the actually scheduled PDSCH and the PDCCH are not in the same slot, the signal part cached in advance by the terminal device is unnecessary, which causes a waste of power consumption. As shown in a right part of FIG. 4, if the terminal device can know in advance that no scheduling exists in the current slot, in a process in which the terminal device decodes the PDCCH after receiving the PDCCH, the terminal device may turn off a radio frequency module, and does not cache any signal. In this way, an energy saving effect may be achieved (a shadow part in the lower right corner indicates saved energy).

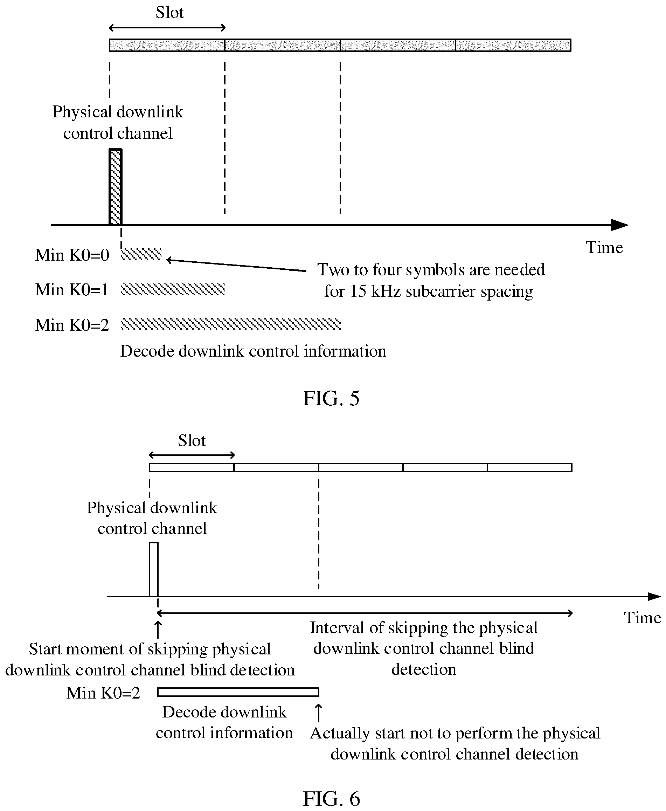

In addition, a speed of decoding the PDCCH by the terminal device also affects the power consumption of the terminal device. If the speed of decoding the PDCCH by the terminal device is relatively fast, the terminal device needs to work at a relatively high clock frequency and a relatively high voltage. Therefore, the power consumption is relatively high. If the terminal device knows in advance that there is a minimum slot interval between the PDCCH and data scheduled by using the PDCCH or an aperiodic reference signal triggered by the PDCCH, the terminal device may reduce the speed of decoding the PDCCH, to reduce the working clock frequency and the working voltage, thereby reducing power consumption. For example, if the network indicates a minimum value of a current available value of a "K0" value for the terminal device, that is, the network dynamically indicates a minimum K0 value by using layer 1 (layer 1, L1) signaling or through configuration based on RRC signaling. FIG. 5 is a schematic diagram of PDCCH decoding duration required in intra-slot scheduling or cross-slot scheduling. The terminal device may reduce the speed of decoding the PDCCH. For example, a PDCCH decoding time may be prolonged to an end of a slot corresponding to (n+minimum KO-1). Herein, n is a number of a slot in which the PDCCH is located. Specifically, as shown in FIG. 5, when minimum K0=0 and when subcarrier spacing (subcarrier spacing, SCS) is 15 kHz, a DCI decoding time may be prolonged to two to four symbols. When minimum K0=1, a DCI decoding time may be prolonged to an end of a slot n. When minimum K0=2, a DCI decoding time may be prolonged to an end of a slot n+1.

Therefore, a minimum value of a current available value of "K0/K2" is set, that is, minimum K0/minimum K2. In this case, the terminal device can know in advance that the data (a PDSCH/a PUSCH) scheduled by using the PDCCH appears only in a slot corresponding to (n+minimum K0 or n+minimum K2) or in a following slot. The terminal device may obtain the following benefits: (1) The terminal device does not cache data before successfully decoding the PDCCH, and enters into micro-sleep (micro-sleep) (for example, turns off a radio frequency receiving module), to reduce power consumption. (2) The terminal device may further reduce the speed of decoding the PDCCH, to reduce the clock frequency and the working voltage, thereby reducing the power consumption.

### (4) A first technology for determining a start moment of a time period in which a terminal device skips PDCCH blind detection and a time from which the terminal device actually does not perform PDCCH detection

In the current conventional technologies, the start moment of the time period in which the terminal device skips the PDCCH blind detection is a first symbol (as shown in FIG. 1 and FIG. 2) after the PDCCH carrying the power saving signal.

After the minimum K0 value is set, the DCI decoding time of the terminal device may be prolonged, for example, may be prolonged to the end of the slot corresponding to (n+minimum KO-1). Only after successfully decoding the DCI, the terminal device knows whether the network indicates the terminal device to skip the PDCCH blind detection. Therefore, when the terminal device takes a relatively long time in the DCI decoding, a moment from which the terminal device does not perform PDCCH detection is actually after the start moment of the time period of skipping the PDCCH blind detection. FIG. 6 is a schematic diagram in which a start moment that is of a time period in which a terminal device skips PDCCH blind detection and that is determined by a network side is inconsistent with a time from which the terminal device actually does not perform PDCCH detection. The DCI transmitted by using the PDCCH indicates the terminal device to skip the PDCCH detection for the time period. Herein, PDCCH skipping duration starts from a first symbol after the PDCCH. Because the DCI decoding performed by the terminal device requires a specific time period, a moment from which the terminal device actually does not to perform the PDCCH detection is after a start moment of the PDCCH skipping duration. This may have the following disadvantages:

Disadvantage 1: Because the moment from which the terminal device actually does not perform the PDCCH detection is after the start moment of the PDCCH skipping duration, a time in which the terminal device actually does not perform the PDCCH detection decreases, thereby reducing a power saving gain of the terminal device.

Disadvantage 2: Because the network does not know when the terminal device successfully decodes the DCI, the network is unclear about the moment from which the terminal device actually does not perform the PDCCH detection (even if the start moment of the PDCCH skipping duration is consistent between the network and the terminal device). Consequently, the network is unclear about the moment from which the PDCCH is not sent. For example, if the terminal device takes a relatively long time in the DCI decoding, the terminal device also performs the PDCCH detection during the DCI decoding. In this case, the network may further send a PDCCH to schedule the terminal device. If the network does not send the PDCCH from the start moment of the PDCCH skipping duration, because the network does not send the PDCCH but the terminal device performs the PDCCH detection when the terminal device decodes the DCI, a scheduling opportunity of the network is reduced, a data delay is increased, and the power consumption of the terminal device is also increased. For another example, if the terminal device takes a relatively short time in the DCI decoding but the network mistakenly considers that the terminal device takes a relatively long time in the DCI decoding, the network schedules the PDCCH again within the DCI decoding time of the terminal device in a perspective of the network, and the terminal device omits the PDCCH, thereby causing a waste of network resources and power consumption.

### (5) A second technology for determining a start moment of a time period in which a terminal device skips PDCCH blind detection and a time from which the terminal device actually does not perform PDCCH detection

The start moment of the time period in which the terminal device skips the PDCCH blind detection is a first symbol after the terminal device feeds back a HARQ ACK to the base station for a power saving signal, for example, after the terminal device sends information carrying the HARQ ACK.

Disadvantage 1: If the DCI carrying the power saving signal in the PDCCH monitoring skipping is non-scheduling DCI, there is no HARQ ACK/NACK feedback mechanism for the non-scheduling DCI.

Disadvantage 2: Scheduling DCI indicates the terminal device to perform PDCCH skipping. A slot in which the terminal device feeds back a HARQ ACK is a K1^{th} slot after a slot in which a PDSCH scheduled by using the PDCCH is located. The slot in which the PDSCH is located a K0^{th} slot after a slot in which the PDCCH is located. Therefore, the start moment of the PDCCH skipping duration is related to K0 and K1 (for example, the terminal device may feed back the ACK in a (K0+K1)^{th} slot after the slot in which the PDCCH is located). Herein, K0 and K1 are dynamically indicated in the PDCCH. Therefore, a time interval between the start moment of the PDCCH skipping duration and the PDCCH carrying the power saving signal dynamically changes, which does not facilitate the network in calculating a time length of the PDCCH skipping duration. In addition, the PDCCH skipping duration is generally relatively short and indicates an interval between two times of effective scheduling. The PDCCH skipping duration is in the same order of magnitude with K0 and K1. Therefore, a plurality of candidate lengths of skipping duration may need to be designed for dynamically changing start moments of PDCCH skipping duration. This increases a quantity of bits in a bit field for dynamically indicating the skipping duration.

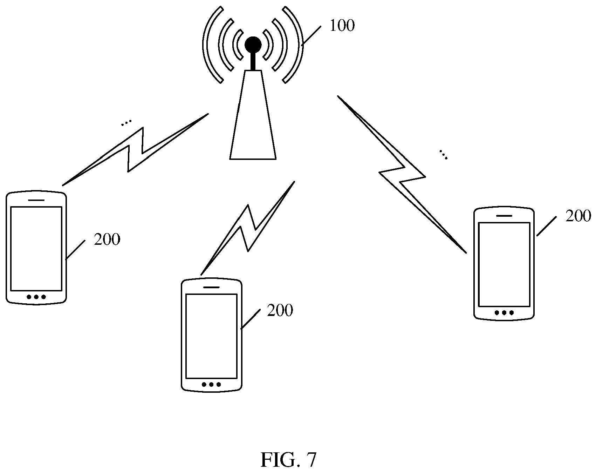

FIG. 7 is a schematic diagram of a communication system according to this application. The communication system may include at least one network device 100 (only one is shown) and one or more terminal devices 200 connected to the network device 100.

The network device 100 may be a device that can communicate with the terminal device 200. The network device 100 may be any device having a wireless transceiver function, including but is not limited to a NodeB NodeB, an evolved NodeB eNodeB, a base station in a fifth generation (fifth generation, 5G) communication system, a base station or a network device in a future communication system, an access node in a Wi-Fi system, a wireless relay node, a wireless backhaul node, and the like. The network device 100 may alternatively be a radio controller in a cloud radio access network (cloud radio access network, CRAN) scenario. The network device 100 may alternatively be a small cell, a transmission reception node (transmission reception point, TRP), or the like. A specific technology and a specific device form that are used by the network device are not limited in the embodiments of this application.

The terminal device 200 is a device having a wireless transceiver function. The device may be deployed on land, including an indoor or outdoor device, a hand-held device, a wearable or vehicle-mounted device; may be deployed on a water surface, for example, on a ship; or may be deployed in air, for example, on an aircraft, a balloon, and a satellite. The terminal device may be a mobile phone (mobile phone), a tablet computer (pad), a computer having a wireless transceiver function, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in the embodiments of this application. Sometimes, the terminal device is also referred to as user equipment (user equipment, UE), an access terminal device, a UE unit, a mobile station, a remote station, a remote terminal device, a mobile device, a terminal (terminal), a wireless communication device, a UE agent, a UE apparatus, or the like.

It should be noted that the terms "system" and "network" in the embodiments of the present invention may be used interchangeably. "A plurality of" means two or more than two. In view of this, in the embodiments of the present invention, "a plurality of' may also be understood as "at least two". The term "and/or" describes an association relationship between associated objects and indicates that three relationships may exist. For example, A and/or B may indicate the following three cases: Only A exists, both A and B exist, and only B exists. In addition, the character "/" usually indicates an "or" relationship between the associated objects unless specified otherwise.

The embodiments of this application provide a communication method and apparatus. A network device and a terminal device determine a time from which PDCCH detection is actually stopped, so that the network device and the terminal device can have consistent understanding for the time from which the terminal device actually stops the PDCCH detection, to improve resource utilization and reduce power consumption of the terminal device.

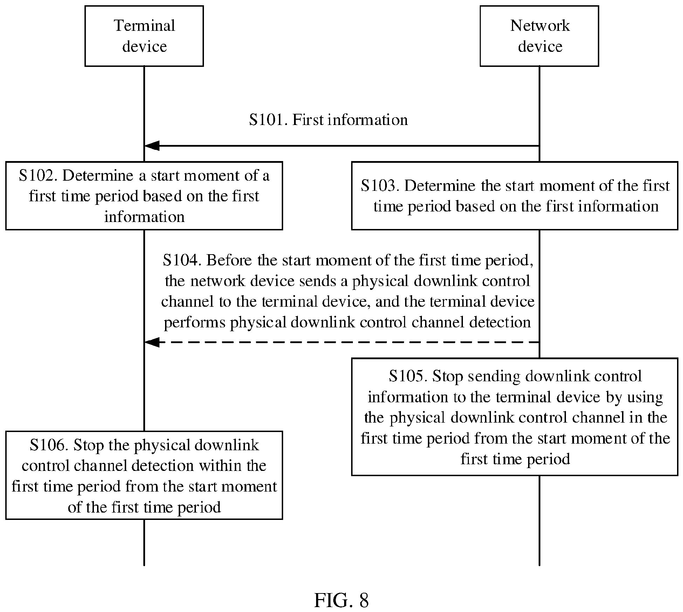

FIG. 8 is a schematic diagram of an interaction process of a communication method according to an embodiment of this application. For example, the method may include the following steps.

S101. A network device sends first information to a terminal device. The first information is used to indicate the terminal device to skip physical downlink control channel blind detection.

Correspondingly, the terminal device receives the first information.

In specific implementation, the first information may be DCI. The network device sends the DCI in an n^{th} slot, and UE receives the DCI in the n^{th} slot. The DCI is carried in a PDCCH. The first information indicates the UE to skip the PDCCH blind detection, that is, indicates the UE not to perform the PDCCH detection within specific duration.

S 102. The terminal device determines a start moment of a first time period based on the first information.

The UE receives the DCI in the n^{th} slot. However, the UE needs a specific time for DCI decoding. Only after decoding the DCI, the UE can know whether the network device indicates the UE to skip the PDCCH blind detection. Therefore, the start moment from which the UE actually does not perform the PDCCH detection, that is, the start moment of the first time period is generally after a specific time interval after the UE receives the DCI. Therefore, the start moment of the first time period needs to be determined.

The foregoing describes the cross-slot scheduling in Rel-16. If the terminal device knows in advance that there is a minimum slot interval between the PDCCH and data scheduled by using the PDCCH or an aperiodic reference signal triggered by the PDCCH, the terminal device may reduce a speed of decoding the PDCCH, to reduce a working clock frequency and a working voltage, thereby reducing power consumption. Therefore, DCI decoding duration of the UE may be related to a minimum slot interval: minimum K0.

In addition, the DCI decoding time of the UE may also be a constant agreed on in advance between the network device and the UE.

Therefore, the start moment of the first time period may be determined based on the first information (specifically, a slot in which the UE receives the first information) and the DCI decoding time of the UE, that is, the start moment from which the UE actually does not perform the PDCCH detection. The start moment of the first time period is a start moment of a slot corresponding to a sum of a first slot value and a slot number of receiving the first information.

S103. The network device determines the start moment of the first time period based on the first information.

Specific implementation in which the network device determines the start moment of the first time period is the same as step S102.

S104. Before the start moment of the first time period, the network device sends the downlink control information to the terminal device by using the physical downlink control channel.

Correspondingly, the terminal device performs the physical downlink control channel detection before the start moment of the first time period.

This step is an optional step. Based on step S102 and step S103, the start moment from which the UE actually does not perform the PDCCH detection. Therefore, before the start moment, the network device can still send the PDCCH to the UE. Correspondingly, the UE may also perform the PDCCH detection before the start moment, to avoid an increase of a scheduling delay and improve utilization of time-frequency resources.

S105. The network device stops sending the downlink control information to the terminal device by using the PDCCH within the first time period from the start moment of the first time period.

Based on the foregoing steps, the network device and the UE have determined the start moment of the first time period. The start moment is the start moment from which the UE actually does not perform the PDCCH detection. The network device stops sending the DCI to the UE by using the PDCCH within the first time period from the start moment.

S106. The terminal device stops the physical downlink control channel detection within the first time period from the start moment of the first time period.

Similarly, the UE and the network device have determined the start moment of the first time period. The UE actually does not perform the PDCCH detection from the start moment. Therefore, the start moment that is of the first time period and that is determined by the network device and the UE in the same manner is consistent with the start moment from which the UE actually does not perform the PDCCH detection, to ensure communication reliability and reduce power consumption of the UE.

Specifically, step S102 or step S103 may have a specific implementation A to a specific implementation C in the following:
Implementation A: The first slot value is a minimum K0 value. In other words, the start moment of the first time period is the start moment of the slot corresponding to the sum of the minimum K0 value and the slot number n of receiving the first information. The minimum K0 value is a minimum slot interval: minimum K0 between the physical downlink control channel and a physical downlink shared channel.

In specific implementation, after the network device indicates currently effective minimum K0 by using RRC signaling or dynamic layer 1 (layer1, L1) signaling, before the slot corresponding to n+minimum K0, the UE does not expect to receive the PDSCH scheduled by using the PDCCH. Therefore, the UE may correspondingly prolong the DCI decoding time, to reduce power consumption of the UE. For example, the UE may prolong the DCI decoding time to a slot corresponding to n+minimum KO-1.

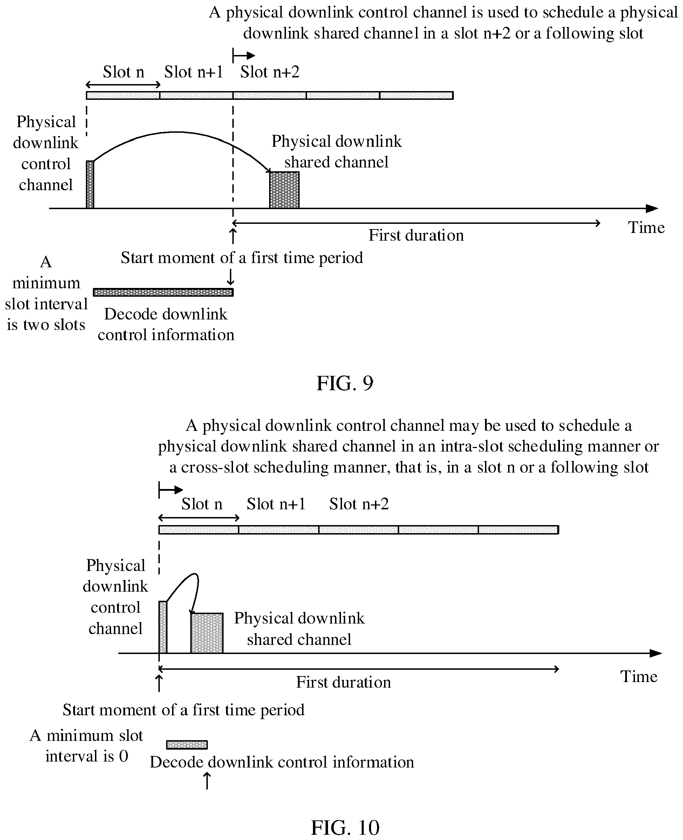

As shown in FIG. 9, the DCI transmitted by using the PDCCH is scheduling DCI. The scheduling DCI indicates the UE to skip the PDCCH blind detection for a time period. In FIG. 9, minimum K0=2. The PDCCH is used to schedule the PDSCH in a slot n+2 or a subsequent slot. The UE may prolong the DCI decoding time to a slot corresponding to n+1. Because the UE has successfully decoded the DCI at a start moment of the slot corresponding to n+minimum K0=n+2, in this example, the start moment from which the terminal device actually does not perform the PDCCH detection is determined as a start moment of the slot corresponding to n+minimum K0, that is, the start moment of the first time period is a start symbol of the slot corresponding to n+2. In this example, the duration for which the DCI indicates the UE to skip the PDCCH blind detection is 5 ms. In other words, the first duration (the PDCCH skipping duration) is 5 ms. Herein, the time length of the first time period is equal to the first duration. In other words, the duration in which the UE actually does not perform the PDCCH detection is the first duration. In this way, the network device knows that the terminal device does not perform the PDCCH detection from the start moment of the first time period. Therefore, the following case can be avoided: The network device and the terminal device have inconsistent understanding for the moment from which the terminal device actually stops the PDCCH detection. In addition, the time length in which the terminal device actually does not perform the PDCCH detection is equal to the first duration in which the network device indicates the UE to skip the PDCCH blind detection, to fully reduce power consumption of the terminal device.

If a timer (timer) is defined for the first time period, the timer is started at the start moment of the slot corresponding to the first time period. During a timing period of the timer, the UE does not perform the PDCCH detection. After timing of the timer ends (the timer expires), the UE resumes the normal PDCCH detection. When discontinuous reception (DRX) is configured, if the UE is not in a discontinuous reception active time (DRX active time) after the timing of the timer ends, the UE does not perform the PDCCH detection because the UE does not perform the PDCCH detection in a DRX inactive time. If the UE is still in a discontinuous reception active time (DRX active time) after the timing of the timer ends, the UE resumes the PDCCH detection.

The DCI decoding time may last to an end of the slot corresponding to n+minimum KO-1. In other words, the DCI decoding time may last to an end of a slot n+1. However, the DCI decoding performed by the UE is implemented by the UE. In this embodiment, the DCI decoding time is not limited to necessarily last to the end of the slot corresponding to n+minimum KO-1. For example, UEs with different capabilities or UE have/has different DCI decoding speeds at different electricity quantities. It is possible that the UE has completed the DCI decoding before the end of the slot corresponding to n+minimum KO-1. However, in this embodiment, the moment from which the UE actually does not perform the PDCCH detection (that is, a moment from which an indication for skipping the PDCCH blind detection takes effect or the start moment of the first time period) is the start moment of the slot corresponding to n+minimum K0.

Further, the symbol of the slot may be an orthogonal frequency division multiplexing (orthogonal frequency division multiplexing, OFDM) symbol. When duration of a symbol can be ignored, the solution may also be described as follows: The start moment of the first time period is the start symbol of the slot corresponding to the sum of the minimum K0 value and the slot number n of receiving the first information. When duration of a symbol cannot be ignored, the solution may also be described as follows: The start moment of the first time period is a start location of the start symbol of the slot corresponding to the sum of the minimum K0 value and the slot number n of receiving the first information.

In the foregoing example in which minimum K0≥1, if minimum K0=0, the start moment of the first time period may be two implementations: a manner 1 and a manner 2.

Manner 1: As shown in FIG. 10, the start moment of the first time period is the start symbol of the slot in which the PDCCH for transmitting the power saving signal (indicating the UE to skip the PDCCH detection for the time period) is located. However, the DCI decoding time of the UE in this case may be the same as that in Rel-15. However, the DCI decoding time is not specified in the Rel-15 protocol. Therefore, for the PDCCH skipping when minimum K0=0, implementation of the network may be used to avoid inconsistent understanding between the network device and the UE for the start moment of the first time period. For example, after sending the PDCCH for indicating the UE to skip the PDCCH detection for the time period, the network device does not send a new PDCCH until the PDCCH skipping duration ends.

Manner 2: When minimum K0=0, the DCI decoding time of the UE is related to subcarrier spacing (subcarrier spacing, SCS). For example, when the SCS=15 kHz/30 kHz, all UEs can successfully decode the DCI in one slot. When the SCS=60 kHz/120 kHz, the DCI decoding time of the UE may need to be greater than one slot. For example, all the UEs can successfully decode the DCI before the (n+2)^{th} slot (in this case, the DCI decoding time of the UE may last to the end of the (n+1)^{th} slot). Therefore, a constant Z may be predefined for the moment from which the UE actually does not perform the PDCCH detection. The start moment from which the UE actually does not perform the PDCCH detection, or referred to as the start moment of the first time period, is a start symbol of a slot n+Z. For example, a table about the constant Z may be defined. The table is shown in Table 1 or Table 2. Before the slot n+Z, the UE may not successfully decode the DCI. Therefore, the UE still performs the PDCCH detection. The network device may continue to schedule the UE before the slot n+Z.

It should be noted that the predefined constant herein may be represented by another symbol, for example, M, N, or Q, provided that the constant can reflect the DCI decoding time.

It should be noted that the constant Z may be predefined, or may be configured by the network device for the terminal device (for example, by using RRC signaling), or may be reported by the terminal device to the network device by using RRC signaling. The constant Z is carried in capability information (UE capability information) or assistance information (UE assistance information) reported by the UE.

**Table 1**

| SCS | Z (unit: slot) |
|---|---|
| 15 kHz | 1 |
| 30 kHz | 1 |
| 60 kHz | 2 |
| 120 kHz | 2 |

**Table 2**

| SCS | Z (unit: slot) |
|---|---|
| 15 kHz | 1 |
| 30 kHz | 1 |
| 60 kHz | 1 |
| 120 kHz | 2 |

It should be noted that, in this implementation, the DCI carrying the power saving signal is not limited to scheduling DCI. The DCI may alternatively be non-scheduling DCI. For example, the DCI may be in an existing DCI format 2_0/2_1/2_2/2_3, or a DCI format newly defined in a protocol.

It may be learned from the foregoing that the moment from which the UE actually does not perform the PDCCH detection is the start moment of the first time period, to ensure that the network device and the UE have consistent understanding for the actual start moment of the PDCCH skipping. The UE does not perform the PDCCH detection in the first time period. In addition, the duration of the first time period is equal to the first duration in which the network device indicates the UE to skip the PDCCH blind detection, to fully reduce power consumption of the UE. In addition, the start moment of the time period in which the UE skips the PDCCH blind detection is after the UE successfully decodes the DCI, to schedule the UE when the UE decodes the DCI, thereby improving resource utilization.

In addition, the currently effective minimum K0 is a determined value. Therefore, a time interval between the DCI for an indication function and the start moment of the first time period is fixed. This helps the network calculate and indicate the duration of the first time period, that is, the first duration.

Implementation B: The first slot value is a first constant value. In other words, the start moment of the first time period is the start moment of the slot corresponding to the sum of the first constant value and the slot number of receiving the first information. The first constant value is related to subcarrier spacing. A first constant value corresponding to first subcarrier spacing is greater than or equal to a first constant value corresponding to second subcarrier spacing. The first subcarrier spacing is greater than the second subcarrier spacing.

Different from the implementation A, the DCI decoding time of the UE does not change with a change of minimum K0.

A constant Z is predefined. The first slot value is the constant Z. The constant Z may be a maximum value of the DCI decoding time of the UE obtained after UE capabilities of manufacturers are integrated. In other words, generally, the UE has successfully decoded the DCI at the start moment of the slot corresponding to n+Z. In other words, a moment at which the UE completes the DCI decoding may be before the start moment of the slot corresponding to n+Z.

Similar to the constant Z in the implementation A, the constant may also be represented by another letter, provided that the constant can reflect the DCI decoding time. The constant Z may be predefined, or may be configured by the network device for the terminal device (for example, by using RRC signaling), or may be reported by the terminal device to the network device by using RRC signaling. The constant Z is carried in capability information (UE capability information) or assistance information (UE assistance information) reported by the UE.

The constant Z is related to current subcarrier spacing. For example, a table similar to Table 1 or Table 2 may be predefined. Further, a first slot value corresponding to the first subcarrier spacing is greater than or equal to a first slot value corresponding to the second subcarrier spacing. The first subcarrier spacing is greater than the second subcarrier spacing. As shown in Table 1, if a first slot value Z corresponding to 30 kHz is 1, and a first slot value Z corresponding to 60 kHz is 2, a first slot value corresponding to 60 kHz is greater than a first slot value corresponding to 30 kHz.

In this implementation, the first slot value is not related to minimum K0. If the DCI indicates the UE to skip the PDCCH detection for the time period, the start moment of the first time period is the start moment of the slot corresponding to n+Z. The UE successfully decodes the DCI before the start moment of the slot corresponding to n+Z. It cannot be ensured that the DCI decoding succeeds before a start moment of a slot corresponding to n+Z-1. Therefore, the moment from which the UE actually does not perform the PDCCH detection is defined as the start moment of the slot corresponding to n+Z.

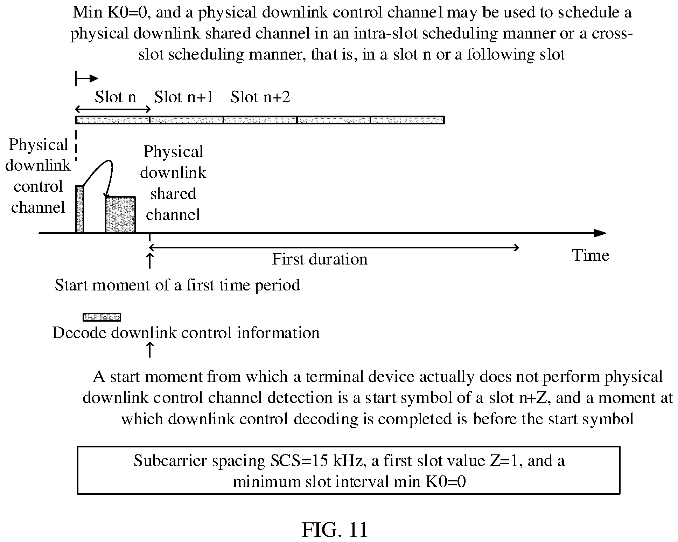

As shown in FIG. 11, in this example, SCS=15 kHz, Z=1, and minimum K0=0. The UE receives the PDCCH in a slot n. The PDCCH may be used to schedule a PDSCH in an intra-slot scheduling manner or a cross-slot scheduling manner, that is, in a slot n or a following slot. The DCI carried in the PDCCH indicates the UE to skip the PDCCH blind detection for the time period. The DCI decoding is completed before the start moment of the slot n+1. The UE actually does not perform the PDCCH detection from the start moment of the slot n+1.

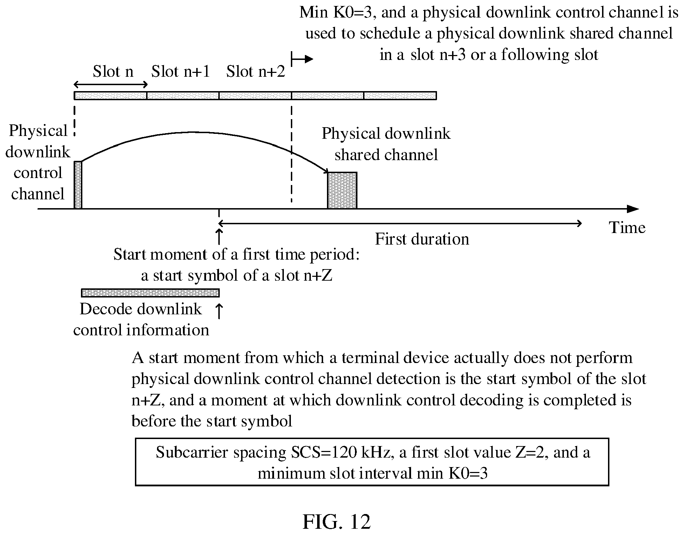

As shown in FIG. 12, in this example, SCS=120 kHz, Z=2, and minimum K0=3. The UE receives the PDCCH in a slot n. The PDCCH may be used to schedule a PDSCH in a slot corresponding to n+3 or a following slot. The DCI carried in the PDCCH indicates the UE to skip the PDCCH blind detection for the time period. The DCI decoding is completed before the start moment of the slot corresponding to n+2. The UE actually does not perform the PDCCH detection from the start moment of the slot corresponding to n+2.

It may be learned from the foregoing that the start moment of the time period in which the UE skips the PDCCH blind detection is after the UE successfully decodes the DCI, to ensure that the network device and the UE have consistent understanding for the actual start moment of the PDCCH skipping. The UE does not perform the PDCCH detection in the first time period, to fully reduce the power consumption of the UE.

In addition, the first slot value is a constant value. In this case, the determined start moment of the first time period is a determined value. Therefore, a time interval between the start moment of the first time period and the DCI for an indication function is fixed. This helps the network calculate and indicate the duration of the first time period.

Implementation C: The first slot value is a maximum value of a minimum K0 value and a first constant value. In other words, the start moment of the first time period is the start moment of the slot corresponding to the sum of the first slot value and the slot number of receiving the first information. The minimum K0 value is a minimum slot interval between the physical downlink control channel and a physical downlink shared channel.

Specifically, the first slot value X=max (minimum K0, Z). Herein, Z is the first constant value, and a meaning of Z is the same as a meaning of Z in the implementation B.

When minimum KO<Z, the DCI decoding time of the UE may still last to a slot n+Z-1. The UE cannot shorten the DCI decoding time. When minimum K0>Z, the UE may prolong the DCI decoding time to an (n+minimum K0-1)^{th} slot. Therefore, that X is equal to a maximum value of minimum K0 and Z ensures that the UE successfully decodes the DCI before a slot n+X.

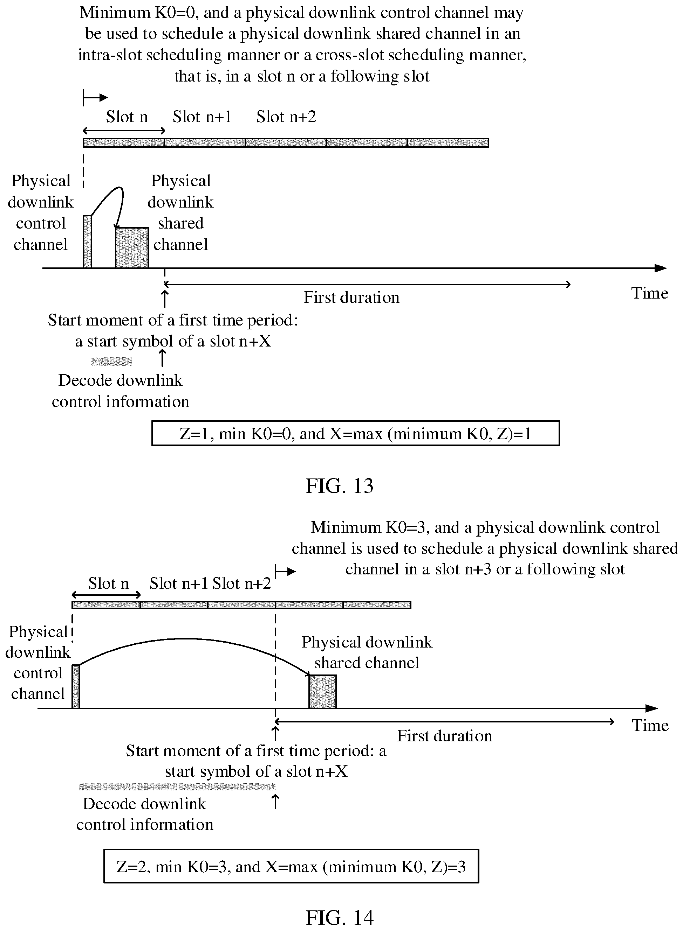

As shown in FIG. 13, in this example, minimum K0=0, and Z=1. In this case, the PDCCH may be used to schedule a PDSCH in an intra-slot scheduling manner or a cross-slot scheduling manner, that is, in a slot n or a following slot. The UE receives the DCI in the slot n. The DCI indicates the UE to skip the PDCCH detection for the time period. If the first slot value X=max (minimum K0, Z)=1, the start moment of the first time period is the start moment of the slot corresponding to n+1. To be specific, the UE actually does not perform the PDCCH detection from the start moment of the slot corresponding to n+1.

As shown in FIG. 14, in this example, minimum K0=3, and Z=2. In this case, the PDCCH may be used to schedule a PDSCH in a slot corresponding to n+3 or a following slot. The UE receives the DCI in the slot n. The DCI indicates the UE to skip the PDCCH detection for the time period. If the first slot value X=max (minimum K0, Z)=3, the start moment of the first time period is the start moment of the slot corresponding to n+3. To be specific, the UE actually does not perform the PDCCH detection from the start moment of the slot corresponding to n+3.

It may be learned from the foregoing that the start moment of the time period in which the UE skips the PDCCH blind detection is after the UE successfully decodes the DCI, to ensure that the network device and the UE have consistent understanding for the actual start moment of the PDCCH skipping. The UE does not perform the PDCCH detection in the PDCCH skipping duration, to fully reduce the power consumption of the UE.

In addition, X is a determined value. In this case, the determined start moment of the first time period is a determined value. Therefore, the time interval between the start moment of the first time period and the DCI for an indication function is fixed. This helps the network calculate and indicate the duration of the first time period.

In the communication method provided in the embodiments of this application, the network device and the terminal device determine the time at which the PDCCH detection is actually stopped, so that the network device and the terminal device can have consistent understanding for the time at which the terminal device actually stops the PDCCH detection, to improve resource utilization and reduce power consumption of the terminal device.

In the implementation A to the implementation C, the duration of the first time period in which the UE actually does not perform the PDCCH detection is equal to the first duration in which the network device indicates the UE to skip the PDCCH blind detection, to fully reduce power consumption of the UE.

The duration defined by the network to skip the PDCCH blind detection (PDCCH skipping duration) may also not be consistent with the time (the first time period) in which the UE actually does not perform the PDCCH detection. In other words, the duration of the first time period in which the UE actually does not perform the PDCCH detection may be less than the first duration that the network device indicates the UE to skip the PDCCH blind detection. For example, as shown in FIG. 1 and FIG. 2, the network specifies that the PDCCH skipping duration starts from the first symbol after the symbol of sending the DCI. The terminal device actually does not perform the PDCCH detection only after successfully decoding the DCI. Therefore, the moment from which the UE actually does not perform the PDCCH detection is after a moment from which the PDCCH skipping duration starts. However, the network is unclear about the start moment from which the UE actually does not perform the PDCCH detection. Therefore, the network needs to define the start moment from which the UE actually does not perform the PDCCH detection, that is, define an effective moment of the PDCCH skipping.

With reference to the implementation A to the implementation C, the effective moment of the PDCCH skipping may be defined based on the DCI decoding time of the UE.

Specifically, the start moment from which the UE actually does not perform the PDCCH detection is a start moment of the slot corresponding to n+X. In other words, although the PDCCH skipping duration starts from the first symbol after the PDCCH, the PDCCH skipping actually takes effect from a start moment of an X^{th} slot after the PDCCH. Similar to the implementation A to the implementation C, X also has three implementations: X=minimum K0, or Z, or max (minimum K0, Z).

In addition, the DCI is further used to indicate the first duration of skipping the physical downlink control channel blind detection. In this embodiment, the duration of the first time period is less than the first duration.

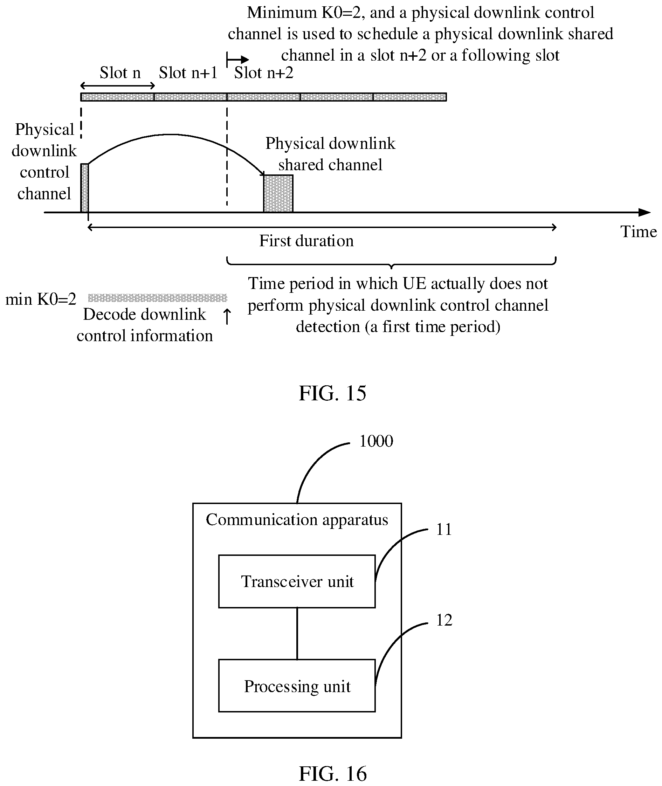

For example, X=minimum K0. As shown in FIG. 15, minimum K0=2. The PDCCH may be used to schedule a PDSCH in a slot corresponding to n+2 or a following slot. The DCI carried in the PDCCH indicates the UE to skip the PDCCH detection for the time period (that is, the first duration). The first duration (the PDCCH skipping duration) starts from a first symbol after the DCI is received. The start moment from which the UE actually does not perform the PDCCH detection is a start symbol of the slot corresponding to n+2. In this way, the duration in which the UE actually does not perform the PDCCH detection is less than the first duration. However, the network knows the start moment from which the UE actually does not perform the PDCCH detection. In this way, the network device may further schedule the UE after the start moment of the PDCCH skipping duration and before the start moment from which the UE actually does not perform the PDCCH detection. For the UE, even if the UE successfully decodes the DCI and knows that the DCI indicates the PDCCH skipping before the start moment from which the UE actually does not perform the PDCCH detection, the UE still performs the PDCCH detection before the start moment (that is, before the slot n+X) from which the PDCCH detection is actually not performed. For example, in the (n+1)^{th} slot in FIG. 15, regardless of whether the UE successfully decodes the DCI in the slot, the UE performs the PDCCH detection. The network may also send the DCI by using the PDCCH in the slot to schedule the UE.

It may be learned from the foregoing that, in comparison with a conventional technology of specifying that the PDCCH skipping duration starts from the first symbol after the symbol of sending the DCI symbol, in this embodiment, the network device knows the start moment from which the UE actually does not perform the PDCCH detection. Before the start moment from which the UE actually does not perform the PDCCH detection, the network device can still schedule the PDSCH, to improve resource utilization.

It may be understood that the implementation described in this solution is applicable to a case in which the PDCCH is located in first several symbols of a slot, for example, is located in first S symbols of a slot, where S=1, or S=2, or S=3.

This solution is also applicable to a case in which the PDCCH is located in a middle symbol location or an end symbol location in a slot. In this case, the UE may no longer ensure that the DCI decoding succeeds from a start moment of an X^{th} slot after the slot in which the PDCCH is located. For example, the DCI for indicating the UE to skip the PDCCH blind detection is located at three end symbols of a slot n. Herein, X=minimum K0=1. Therefore, there is no time interval between the DCI and a start moment of a next slot of the slot n in which the DCI is located. In this case, the UE cannot complete the DCI decoding at the start moment of the slot n+1. However, provided that the start moment of the first time period is clear, the network device stops sending the DCI to the terminal device by using the PDCCH after the start moment of the first time period. However, the terminal device may complete the DCI decoding only at a moment after the start moment of the first time period. Therefore, the PDCCH detection is actually not performed. Consequently, the UE performs the PDCCH detection at a location at which the PDCCH definitely cannot be detected, thereby causing a waste of power consumption.

To avoid this problem, it may be agreed that if the DCI is located at locations of S symbols at an end of a slot, or if the DCI is not located at locations of S symbols at a start of a slot, it is specified that the start moment (that is, the start moment of the first time period) from which the UE actually does not perform the PDCCH detection is a start moment of an (X+1)^{th} slot after the slot in which the DCI is located, that is, a start moment of a slot corresponding to n+X+1. Herein, X=minimum K0, or X=Z, or X=max (minimum K0, X); S=1, or 2, or 3; and n is a number of a slot in which the DCI is located.

In the foregoing described implementation, the start moment from which the UE actually does not perform the PDCCH detection is determined in a granularity of a slot or in a granularity of an OFDM symbol, to determine the start moment from which the UE actually does not perform the PDCCH detection.

Specifically, a second constant value Z1 may be predefined. Herein, the constant Z1 represents a symbol quantity, to represent DCI decoding duration of the UE. The second constant value Z1 is related to subcarrier spacing. A second constant value Z1 corresponding to first subcarrier spacing is greater than or equal to a second constant value Z1 corresponding to second subcarrier spacing. The first subcarrier spacing is greater than the second subcarrier spacing.

Implementation: The first information is used to indicate the UE to skip the PDCCH blind detection. The first information is carried in the DCI. Therefore, the start moment of the first time period in which the UE actually stops the PDCCH blind detection is a start moment of a (Z1+1)^{th} symbol after a symbol in which the DCI is located.

If the first information further indicates the first duration in which the UE skips the PDCCH blind detection, duration of the first time period may be equal to the first duration, that is, the first duration starts from the start moment of the first time period. In another implementation, if the first duration starts from a first symbol after the symbol in which the DCI carrying the first information is located, duration of the first time period is less than the first duration.

The second constant Z1 may be predefined in a protocol, or may be configured by the network device for the terminal device (for example, by using RRC signaling), or may be reported by the terminal device to the network device by using RRC signaling. The second constant Z1 is carried in capability information (UE capability information) or assistance information (UE assistance information) reported by the UE. For example, a value of the second constant value Z1 is shown in Table 3 or Table 4.

**Table 3**

| SCS | Z1 (unit: OFDM symbol) |
|---|---|
| 15 kHz | 7 |
| 30 kHz | 14 |
| 60 kHz | 14 |
| 120 kHz | 28 |

**Table 4**

| SCS | Z1 (unit: OFDM symbol) |
|---|---|
| 15 kHz | 7 |
| 30 kHz | 14 |
| 60 kHz | 21 |
| 120 kHz | 28 |

In addition, in the foregoing described implementation, the first information is used to indicate the terminal device to skip the physical downlink control channel PDCCH blind detection. The first information is further used to indicate the first duration of skipping the PDCCH blind detection. It may be understood that the foregoing described implementation is also applicable to a case in which the first information does not indicate the duration of skipping the PDCCH blind detection. For example, if the first information is carried in the DCI, it indicates the UE not to monitor the PDCCH until next DRX duration (DRX on duration), the foregoing implementation may still be used to determine the moment from which the UE actually does not perform the PDCCH detection, that is, the start moment of the first time period. In this case, the first information does not explicitly indicate the duration of skipping the PDCCH blind detection. It is easy to understand that an end moment of the first time period in which the UE actually does not perform the PDCCH detection is a start location of next DRX duration. The terminal device resumes the normal PDCCH detection in the next DRX duration.

This solution is also applicable to a case in which the first information indicates another function. Provided that the first information is carried in the DCI carried in the PDCCH, an actual effective moment of this function is determined according to the implementation described in this solution. For example, if the DCI indicates to simultaneously stop a discontinuous reception inactive timer (drx-InactivityTimer) and a discontinuous reception duration timer (drx-onDurationTimer), a moment at which the terminal device actually stops the discontinuous reception inactive timer and a moment at which the terminal device actually stops the discontinuous reception duration timer may be determined according to an implementation described in this solution. Before the moments at which the terminal device actually stops timing of the two timers, the network device may further continue to schedule the terminal device.

The methods in the embodiments of the present invention are described in detail above, and apparatuses in the embodiments of the present invention are provided below.

Based on the same concept as those of the communication methods in the foregoing embodiments, as shown in FIG. 16, an embodiment of this application further provides a communication apparatus 1000. The communication apparatus may be applied to the communication method shown in FIG. 8. The communication apparatus 1000 may be the terminal device 200 shown in FIG. 7, or may be a component (for example, a chip) applied to the terminal device 200. The communication apparatus 1000 includes a transceiver unit 11 and a processing unit 12.

The transceiver unit 11 is configured to receive first information from a network device. The first information is used to indicate the terminal device to skip physical downlink control channel PDCCH blind detection.

The processing unit 12 is configured to determine a start moment of a first time period based on the first information. The start moment of the first time period is a start moment of a slot corresponding to a sum of a first slot value and a slot number of receiving the first information.

The processing unit 12 is further configured to stop the physical downlink control channel detection within the first time period from the start moment of the first time period.

In an implementation, the processing unit 12 is further configured to perform the PDCCH detection before the start moment of the first time period.

For more detailed descriptions of the foregoing transceiver unit 11 and the processing unit 12, directly refer to related descriptions in the method embodiment shown in FIG. 8. Details are not described herein again.

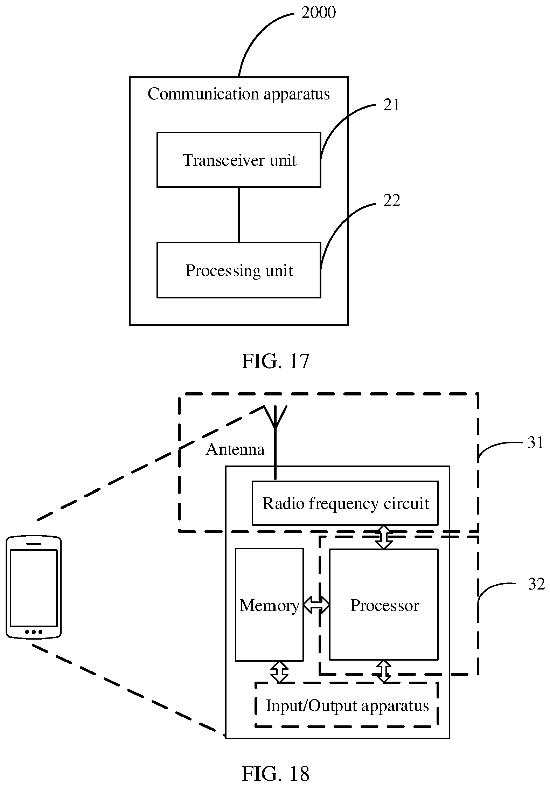

Based on the same concept as those of the communication methods in the foregoing embodiments, as shown in FIG. 17, an embodiment of this application further provides a communication apparatus 2000. The communication apparatus may be applied to the communication method shown in FIG. 8. The communication apparatus 2000 may be the network device 100 shown in FIG. 2, or may be a component (for example, a chip) applied to the network device 100. The communication apparatus 2000 includes a transceiver unit 21 and a processing unit 22.

The transceiver unit 21 is configured to send first information to a terminal device. The first information is used to indicate the terminal device to skip physical downlink control channel PDCCH blind detection.

The processing unit 22 is configured to determine a start moment of a first time period based on the first information. The start moment of the first time period is a start moment of a slot corresponding to a sum of a first slot value and a slot number of receiving the first information.

The transceiver unit 21 is further configured to stop sending downlink control information to the terminal device by using a PDCCH within the first time period from the start moment of the first time period.

In an implementation, the transceiver unit 21 is further configured to send the downlink control information to the terminal device by using the PDCCH before the start moment of the first time period.

For more detailed descriptions of the transceiver unit 21 and the processing unit 22, directly refer to related descriptions in the method embodiment shown in FIG. 8. Details are not described herein again.

An embodiment of this application further provides a communication apparatus. The communication apparatus is configured to perform the foregoing communication methods. Some or all of the foregoing communication methods may be implemented by using hardware, or may be implemented by using software.

Optionally, in a specific implementation, the communication apparatus may be a chip or an integrated circuit.

Optionally, when some or all of the communication methods in the foregoing embodiments are implemented by using software, the communication apparatus includes a memory configured to store a program and a processor configured to execute the program stored in the memory, so that when the program is executed, the communication apparatus is enabled to implement the communication method provided in the embodiment shown in FIG. 8.

Optionally, the memory may be a physically independent unit, or may be integrated with the processor.

Optionally, when some or all of the communication methods in the foregoing embodiments are implemented by using software, the communication apparatus may alternatively include only a processor. A memory configured to store a program is located outside the communication apparatus. The processor is connected to the memory by using a circuit/wire, and is configured to read and execute the program stored in the memory.

The processor may be a central processing unit (central processing unit, CPU), a network processor (network processor, NP), or a combination of a CPU and an NP.

The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (generic array logic, GAL), or any combination thereof.

The memory may include a volatile memory (volatile memory), for example, a random access memory (random access memory, RAM). The memory may also include a nonvolatile memory (non-volatile memory), for example, a flash memory (flash memory), a hard disk drive (hard disk drive, HDD), or a solid-state drive (solid-state drive, SSD). The memory may further include a combination of the foregoing types of memories.

FIG. 18 is a simplified schematic diagram of a structure of a terminal device. For ease of understanding and illustration, an example in which the terminal device is a mobile phone is used in FIG. 18. As shown in FIG. 18, the terminal device includes a processor, a memory, a radio frequency circuit, an antenna, and an input/output apparatus. The processor is mainly configured to: process a communication protocol and communication data, control the terminal device, execute a software program, process data of the software program, and the like. The memory is mainly configured to store software program and data. The radio frequency circuit is mainly configured to: perform conversion between a baseband signal and a radio frequency signal, and process the radio frequency signal. The antenna is mainly configured to transmit and receive a radio frequency signal in an electromagnetic wave form. The input/output apparatus, such as a touchscreen, a display screen, or a keyboard, is mainly configured to: receive data entered by a user, and output data to the user. It should be noted that some types of terminal devices may not have the input/output apparatus.

When data needs to be sent, the processor performs baseband processing on the to-be-sent data, and then outputs a baseband signal to the radio frequency circuit. After performing radio frequency processing on the baseband signal, the radio frequency circuit sends a radio frequency signal in an electromagnetic wave form by using the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 9 shows only one memory and processor. In an actual terminal device product, there may be one or more processors and one or more memories. The memory may also be referred to as a storage medium, a storage device, or the like. The memory may be disposed independent of the processor, or may be integrated with the processor. This is not limited in this embodiment of this application.

In the embodiments of this application, the antenna and the radio frequency circuit that have a transceiver function may be considered as a receiving unit and a sending unit (which may also be collectively referred to as a transceiver unit) of the terminal device, and the processor that has a processing function may be considered as a processing unit of the terminal device. As shown in FIG. 18, the terminal device includes a transceiver unit 31 and a processing unit 32. The transceiver unit 31 may also be referred to as a receiver/transmitter (transmitter), a receiver/transmitter machine, a receiver/transmitter circuit, or the like. The processing unit 32 may also be referred to as a processor, a processing board, a processing module, a processing apparatus, or the like.

For example, in an embodiment, the transceiver unit 31 is configured to perform the function performed by the terminal device in step S101 in the embodiment shown in FIG. 8, and may further be configured to perform the function performed by the terminal device in step S104 in the embodiment shown in FIG. 8; and the processing unit 32 is configured to perform step S102 and step S106 in the embodiment shown in FIG. 8.

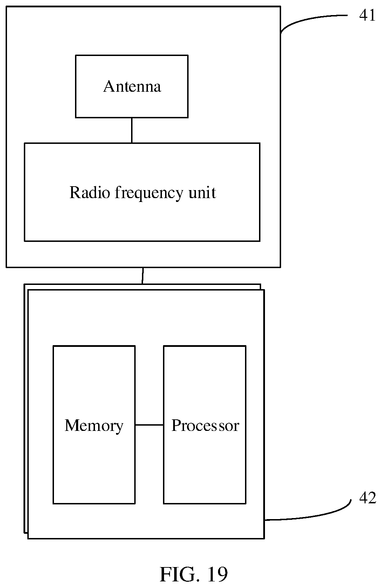

FIG. 19 is a simplified schematic diagram of a structure of a network device. The network device includes a part 42 and a part for radio frequency signal transmission/reception and conversion, and the part for radio frequency signal transmission/reception and conversion further includes a transceiver unit 41. The part for radio frequency signal transmission/reception and conversion is mainly configured to: send/receive a radio frequency signal and perform conversion between a radio frequency signal and a baseband signal. The part 42 is mainly configured to perform baseband processing, control the network device, and the like. The transceiver unit 41 may also be referred to as a receiver/transmitter (transmitter), a receiver/transmitter machine, a receiver/transmitter circuit, or the like. The part 42 is usually a control center of the network device, may usually be referred to as a processing unit, and is configured to control the network device to perform steps performed by the network device in FIG. 8. For details, refer to descriptions of the foregoing related parts.

The part 42 may include one or more boards. Each board may include one or more processors and one or more memories. The processor is configured to read and execute a program in the memory to implement a baseband processing function and control the network device. If there are a plurality of boards, the boards may be interconnected to improve a processing capability. In an optional implementation, a plurality of boards may share one or more processors, or a plurality of boards may share one or more memories, or a plurality of boards may simultaneously share one or more processors.

For example, in an embodiment, the transceiver unit 41 is configured to perform the function performed by the network device in step S101 in the embodiment shown in FIG. 8, and may further be configured to perform the function performed by the network device in step S104 in the embodiment shown in FIG. 8; and the part 42 is configured to perform step S103 and step S105 in the embodiment shown in FIG. 8.

An embodiment of this application further provides a computer-readable storage medium. The computer-readable storage medium stores a computer program or instructions. When the computer program or the instructions are executed, the methods according to the foregoing aspects are implemented.

An embodiment of this application further provides a computer program product including instructions. When the instructions are run on a computer, the computer is enabled to perform the methods according to the foregoing aspects.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, division into the units is merely logical function division and may be other division during actual implementation. For example, a plurality of units or components may be combined or integrated into another system, or some features may be ignored or not performed. The displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located at one location, or may be distributed on a plurality of network units. Some or all of the units may be selected based on actual requirements to achieve the objectives of the solutions of the embodiments.

All or some of the foregoing embodiments may be implemented by using software, hardware, firmware, or any combination thereof. When software is used to implement the embodiments, the embodiments may be implemented completely or partially in a form of a computer program product. The computer program product includes one or more computer instructions. When the computer program instructions are loaded and executed on a computer, the procedures or functions according to the embodiments of this application are all or partially generated. The computer may be a general-purpose computer, a special-purpose computer, a computer network, or another programmable apparatus. The computer instructions may be stored in a computer-readable storage medium, or may be transmitted by using the computer-readable storage medium. The computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible to a computer, or a data storage device, such as a server or a data center, integrating one or more usable media. The usable medium may be a read-only memory (read-only memory, ROM), a random access memory (random access memory, RAM), a magnetic medium such as a floppy disk, a hard disk, a magnetic tape, a magnetic disk, an optical medium such as a digital versatile disc (digital versatile disc, DVD), or a semiconductor medium such as a solid-state drive (solid-state drive, SSD).

## Claims

1. A communication method, wherein the method comprises:
receiving first information from a network device, wherein the first information is used to indicate a terminal device to skip physical downlink control channel PDCCH blind detection;
determining a start moment of a first time period based on the first information, wherein the start moment of the first time period is a start moment of a slot corresponding to a sum of a first slot value and a slot number of receiving the first information; and
stopping the PDCCH detection within the first time period from the start moment of the first time period.

2. The method according to claim 1, wherein after the receiving first information from a network device, the method further comprises:
performing the PDCCH detection before the start moment of the first time period.

3. A communication method, wherein the method comprises:
sending first information to a terminal device, wherein the first information is used to indicate the terminal device to skip physical downlink control channel PDCCH blind detection;
determining a start moment of a first time period based on the first information, wherein the start moment of the first time period is a start moment of a slot corresponding to a sum of a first slot value and a slot number of sending the first information; and
stopping sending downlink control information to the terminal device by using a PDCCH within the first time period from the start moment of the first time period.

4. The method according to claim 3, wherein after the sending first information to a terminal device, the method further comprises:
sending the downlink control information to the terminal device by using the PDCCH before the start moment of the first time period.

5. The method according to any one of claims 1 to 4, wherein the first information is further used to indicate first duration of skipping the PDCCH blind detection, and a time length of the first time period is equal to the first duration.

6. The method according to any one of claims 1 to 5, wherein the first slot value is a minimum K0 value, and the minimum K0 value is a minimum slot interval between the physical downlink control channel and a physical downlink shared channel.

7. The method according to any one of claims 1 to 5, wherein the first slot value is a first constant value.

8. The method according to claim 7, wherein the first constant value is associated with subcarrier spacing, a first constant value corresponding to first subcarrier spacing is greater than or equal to a first constant value corresponding to second subcarrier spacing, and the first subcarrier spacing is greater than the second subcarrier spacing.

9. The method according to any one of claims 1 to 5, wherein the first slot value is a maximum value of a minimum K0 value and a first constant value, and the minimum K0 value is a minimum slot interval between the physical downlink control channel and a physical downlink shared channel.

10. A communication apparatus, wherein the apparatus comprises:
a transceiver unit, configured to receive first information from a network device, wherein the first information is used to indicate a terminal device to skip physical downlink control channel PDCCH blind detection; and
a processing unit, configured to determine a start moment of a first time period based on the first information, wherein the start moment of the first time period is a start moment of a slot corresponding to a sum of a first slot value and a slot number of receiving the first information, and
the processing unit is further configured to stop the physical downlink control channel detection within the first time period from the start moment of the first time period.

11. The apparatus according to claim 10, wherein the processing unit is further configured to perform the PDCCH detection before the start moment of the first time period.

12. A communication apparatus, wherein the apparatus comprises:
a transceiver unit, configured to send first information to a terminal device, wherein the first information is used to indicate the terminal device to skip physical downlink control channel PDCCH blind detection; and
a processing unit, configured to determine a start moment of a first time period based on the first information, wherein the start moment of the first time period is a start moment of a slot corresponding to a sum of a first slot value and a slot number of receiving the first information, and
the transceiver unit is further configured to stop sending downlink control information to the terminal device by using a PDCCH within the first time period from the start moment of the first time period.

13. The apparatus according to claim 12, wherein the transceiver unit is further configured to send the downlink control information to the terminal device by using the PDCCH before the start moment of the first time period.

14. The apparatus according to any one of claims 10 to 13, wherein the first information is further used to indicate first duration of skipping the PDCCH blind detection, and a time length of the first time period is equal to the first duration.

15. The apparatus according to any one of claims 10 to 14, wherein the first slot value is a minimum K0 value, and the minimum K0 value is a minimum slot interval between the physical downlink control channel and a physical downlink shared channel.

16. The apparatus according to any one of claims 10 to 14, wherein the first slot value is a first constant value.

17. The apparatus according to claim 16, wherein the first constant value is associated with subcarrier spacing, a first constant value corresponding to first subcarrier spacing is greater than or equal to a first constant value corresponding to second subcarrier spacing, and the first subcarrier spacing is greater than the second subcarrier spacing.

18. The apparatus according to any one of claims 10 to 14, wherein the first slot value is a maximum value of a minimum K0 value and a first constant value, and the minimum K0 value is a minimum slot interval between the physical downlink control channel and a physical downlink shared channel.

19. A communication apparatus, comprising a transceiver, a memory, and a processor, wherein the memory stores a computer program, and when the processor executes the computer program, the method according to any one of claims 1 to 9 is implemented.

20. A communication apparatus, comprising a processor, wherein the processor is configured to: be coupled to a memory, read instructions in the memory, and implement the method according to any one of claims 1 to 9 according to the instructions.

21. A computer-readable storage medium, comprising a program or instructions, wherein when the program or the instructions are run on a computer, the method according to any one of claims 1 to 9 is performed.

22. A computer program product, comprising a program or instructions, wherein when the program or the instructions are run on a computer, the method according to any one of claims 1 to 9 is performed.

23. A chip, wherein the chip is coupled to a memory, and is configured to read and execute program instructions stored in the memory, to perform the method according to any one of claims 1 to 9.
